# EUROPEAN PATENT SPECIFICATION

(11) **EP 3 043 261 B1**
(45) Date of publication and mention of the grant of the patent: **17.07.2019**
(21) Application number: 13751501.1
(22) Date of filing: 01.03.2013
(51) Int. Cl.: G06F 8/61

(54) **SOFTWARE INSTALLATION METHOD, DEVICE AND SYSTEM**
SOFTWAREINSTALLATIONSVERFAHREN, VORRICHTUNG UND SYSTEM
PROCÉDÉ, DISPOSITIF, ET SYSTÈME D'INSTALLATION DE LOGICIELS

(43) Date of publication of application: 13.07.2016
(73) Proprietor: Tencent Technology (Shenzhen) Company Limited, Guangdong 518044 (CN)
(72) Inventor: WANG, Qing, Futian District Shenzhen City Guangdong 518044 (CN); LUO, Zhanghu, Futian District Shenzhen City Guangdong 518044 (CN); HUANG, Zefeng, Futian District Shenzhen City Guangdong 518044 (CN); GUO, Haoran, Futian District Shenzhen City Guangdong 518044 (CN); XIAO, Quanhao, Futian District Shenzhen City Guangdong 518044 (CN); YUAN, Yixia, Futian District Shenzhen City Guangdong 518044 (CN); SONG, Jiashun, Futian District Shenzhen City Guangdong 518044 (CN); LI, Pengtao, Futian District Shenzhen City Guangdong 518044 (CN); DAI, Yunfeng, Futian District Shenzhen City Guangdong 518044 (CN)
(74) Representative: Gunzelmann, Rainer
(86) International application number: PCT/CN2013/000218
(87) International publication number: WO 2013/123829

(56) References cited:
- WO-A1-2007/117885
- CN-A- 1 325 062
- CN-A- 1 581 077
- CN-A- 102 036 224
- CN-A- 102 184 110
- US-A1- 2004 158 817
- US-A1- 2006 080 659
- US-A1- 2008 244 566
- US-B1- 6 681 391

## Description

This application claims priority to a Chinese patent application No. 2012100410721 entitled "Software Installation Method, Device and System", submitted to the State Intellectual Property Office on February 22, 2010.

### Field of the Invention

The invention relates to computer technology, and more particularly, to a software installation method, device and system.

### Background of the Invention

With the development of the mobile phone market, mobile phones upgrade more frequently, and diversified software can be installed on mobile phones. Currently, when a user is to install software on a mobile phone, he/she usually finds the software needed for installation online one by one, and installs the software on the mobile phone after downloading the software.

US2006/080659 discloses a method for software installation on a mobile device based on the combination of a user identifier and a software identifier and/or a configuration file.US2004/158817 teaches software installation on a device using the combination of a user identifier and a software identifier and/or a configuration file based on which the latest version of a software package is determined and installed.

In the process of realizing the present invention, the inventor finds the following defects of prior art technologies.

To find installation software one by one takes a lot of time and consumes much data traffic, which may lead to low software installation efficiency. Meanwhile, it cannot be guaranteed that the installed software is virus free. The mobile phone is likely to be infected with virus and has certain risks.

### Summary of the Invention

In order to improve the software installation efficiency and reduce risks for mobile terminals, embodiments of the invention provide a software installation method, device and system. The technical solution is as follows.

In an aspect, a software installation method performed at a server includes:
when a user requests to back up a software, receiving user information and identification info of the software; and establishing a corresponding relationship between the user information and the identification info of the software at the server;
when the user requests to install the software that has been backed up at the server onto a first mobile terminal, receiving information of the user and the identification info of the software sent from the first mobile terminal;
looking up corresponding relationships between user information and software information established in advance, and judging whether the corresponding relationships include the information of the user and the identification info of the corresponding software; and
if yes, confirming that the user has backed up the software information, looking up an installation package corresponding to the identification info of the software, and sending the installation package found to the first mobile terminal for installation of the software.

In the method, judging whether the corresponding relationships include the information of the user and the identification info of the corresponding software further includes:
judging whether the corresponding relationships include the information of the user and a configuration file of the corresponding software; and
if yes, sending the configuration file to the first mobile terminal, wherein the configuration file is used to replace a configuration file generated during the installation of the software on the first mobile terminal.

In the method, receiving the information of the user and the identification info of the software sent from the first mobile terminal further includes: receiving personalized information of the user sent from the first mobile terminal; and
looking up the installation package corresponding to the identification info of the software includes:
judging whether the user chooses to install a latest version of the software according to the personalized information of the user;
if yes, looking up the corresponding installation package of the latest version according to the personalized information of the user;
otherwise, looking up version information of a backup of the software corresponding to the information of the user stored in the corresponding relationship, and finding a corresponding installation package according to the version information found.

Or, receiving the information of the user and the identification info of the software sent from the first mobile terminal further includes: receiving personalized information of the user and information of an operating system of the first mobile terminal sent from the first mobile terminal; and
looking up an installation package corresponding to the identification info of the software includes:
according to the personalized information of the user and the information of the operating system of the first mobile terminal, judging whether the user chooses to accept a recommended installation package when there is no installation package matching the operating system of the first mobile terminal;
if yes, looking up an installation package of other software relating to the software that matches the operating system of the first mobile terminal;
otherwise, prompting no installation package of the software matching the operating system of the first mobile terminal, and ending the process.

In another aspect, a software installation method performed by a mobile terminal includes:
when a user requests to install a software that has been backed up at a server installation, sending information of the user and identification info of the software to the server, wherein the information of the user and the identification info of the software are used by the server to judge whether the information of the user and the identification info of the corresponding software exist
in corresponding relationships between user information and software information established in advance;
when the server confirms that the user has backed up the software information and finds an installation package according to the identification info of the software, receiving the installation package sent by the server; and
installing the software according to the installation package received.

In the method, receiving the installation package sent by the server further includes: receiving a configuration file of the software corresponding to the information of the user sent by the user, wherein the configuration file is backed up by the user and saved in the corresponding relationships by the server; and
installing the software according to the installation package received further includes: replacing a configuration file generated during the installation with the configuration file received.

In the method, sending the information of the user and the identification info of the software further includes: if the user sets personalized information concerning whether to install a latest version of the software, sending the personalized information of the user to the server; and
receiving the installation package sent by the server includes:
when the server determines that the user selects to install the software with the latest version according to the personalized information of the user, receiving the installation package of the latest version corresponding to the identification info of the software sent by the server; and
when the server determines that the user selects to install the software with a backup version according to the personalized information of the user, finding out an installation package according to version information at backup of the software corresponding to the information of the user sent by the server.

In the method, sending the information of the user and the identification info of the software to the server further includes:
if the user sets personalized information concerning whether to accept a recommended installation package when there is no installation package matching a
local operating system, sending the personalized information of the user and information of the local operating system to the server; and
receiving the installation package sent by the server includes:
   when the sever determines, according to the personalized information of the user and the information of the local operating system, that the user chooses to accept the recommended installation package when there is no installation package matching the operating system, accepting an installation package of other software sent by the server related to the software and matching the operating system.

In another aspect, a server includes:
a second receiving module, used to receive information of a user and identification info of software when the user requests to back up the software at the server; and
an establishment module, used to establish a corresponding relationship between the information of the user and the identification info of the software at the server;
a first receiving module, used to receive information of the user and the identification info of the software sent from a first mobile terminal when the user requests to install the software on the first mobile terminal;
a judgment module, used to look up corresponding relationships between user information and software information established in advance, and judge whether the corresponding relationships include the information of the user and the identification info of the corresponding software;
a lookup module, used to determine that the user has backed up the software information when the judgment module determines that the corresponding relationships include the information of the user and the identification info of the corresponding software, and look up an installation package corresponding to the software; and
a sending module, used to send the installation package found by the lookup module to the first mobile terminal, wherein the installation package is used to install the software on the first mobile terminal.

The judgment module is further used to judge whether the corresponding relationships include a configuration file of the software corresponding to the information of the user; and
the sending module is further used to send the configuration file to the first mobile terminal when the judgment module determines that the corresponding relationships include the configuration file of the software corresponding to the information of the user, wherein the configuration file is used to replace a configuration file generated during the installation after the software is installed on the first mobile terminal.

The first receiving module is further used to receive personalized information of the user sent from the first mobile terminal; and
the lookup module includes:
a first judgment unit, used to judge whether the user chooses to install a latest version of the software according to the personalized information of the user;
a first lookup unit, used to look up the installation package with the latest version corresponding to the identification info of the software when the first judgment unit determines that the user chooses to install the latest version of the software; and
a second lookup unit, used to look up version information of the software at backup corresponding to the information of the user within the corresponding relationships when the first judgment unit determines that the user chooses not to install the latest version of the software, and look up an installation package corresponding to the version information found.

The first receiving module is further used to receive the personalized information of the user sent from the first mobile terminal and information of the operating system of the first mobile terminal; and
the lookup module includes:
a second judgment unit, used to judge whether the user chooses to accept the recommended installation package when there is no installation package matching the operating system of the first mobile terminal according to the personalized
information of the user and the information of the operating system of the first mobile terminal;
a third lookup unit, used to look up an installation package of other software matching the operating system of the first mobile terminal and relating to the software according to the identification info of the software and the information of the operating system of the first mobile terminal when the second judgment unit determines that the user chooses to accept the recommended installation package when there is no installation package matching the operating system of the first mobile terminal; and
a prompt unit, used to prompt that there is no installation package of the software matching the operating system of the first mobile terminal when the second judgment unit determines that the user chooses not to accept the recommended installation package when there is no installation package matching the operating system of the first mobile terminal, and end the process.

In yet another aspect, a mobile terminal includes:
a sending module, used to send information of a user and identification info of software to a server when the user requests to install the software that has been backed up at the server, to enable the server to judge whether pre-established corresponding relationships between user information and software information include the information of the user and the identification info of the software;
a receiving module, used to receive an installation package sent from the server when the server determines that the user has backed up the information of the software and found corresponding installation package according to the identification info of the software; and
an installation module, used to install the software according to the installation package received by the receiving module.

The receiving module is further used to receive a configuration file of the software corresponding to the information of the user sent by the server, wherein the configuration file is backed up by the user and saved in the corresponding relationships by the server;
the mobile terminal further includes: a replacement module, used to replace a configuration file generated in the installation process with the configuration file received by the receiving module; and
the sending module is further used to send personalized information of the user to the server if the user has set up the personalized information concerning whether to install the latest version of the software.

The sending module is further used to send the personalized information of the user to the server if the user has set up the personalized information concerning whether to install the latest version of the software; and
the receiving module includes:
a first receiving unit, used to receive the installation package of the latest version corresponding to the identification info of the software sent by the server when the server determines that the user chooses to install the latest version of the software according to the personalized information of the user;
a second receiving unit, used to receive the corresponding installation package found according to version information of the software at backup sent by the server when the server determines that the user chooses to install the backup version of the software according to the personalized information of the user.

The sending module is further used to send the personalized information and information of the local operating system to the server if the user has set up the personalized information concerning whether to accept the recommended installation package when there is no installation package matching the local operating system; and
the receiving module is used to receive the installation package of other software related to the software that is sent by the server and matches the operating system when the server determines according to the personalized information of the user and the information of the operating system that the user chooses to accept the recommended installation package when there is no installation package matching the operating system.

In yet another aspect, a software installation system includes: the server as described above, and the mobile terminal as described above.

The technical solution provided by the embodiments of the invention has the following benefits.

When a user requests to install software on a mobile terminal, the user information and the software identification info sent from the mobile terminal is received. When it is determined that the user has backed up information of the software according to pre-established corresponding relationships between user information and software information, look up an installation package corresponding to the identification info of the software, and send it to the mobile terminal to allow the mobile terminal to install the software according to the installation package. This saves the time and data traffic used in looking for installation software on a one-by-one mode, improves the software installation efficiency. Also, the risk associated with software installation on mobile terminals may be reduced because the installation package found is safe and virus free.

Further, a configuration file backed up in advance and the installation package found are sent to the mobile terminal, and the mobile terminal may configure the software according to the configuration file to retain original using habits of the user and greatly improve user experience. Besides, software can be installed according to personalized information of the user and in different situations according to different user settings. The technical solution has more flexible application and strong practicability, and may improve user satisfaction.

### Brief Description of Drawings

In order to illustrate the technical solution in the embodiments of the invention more clearly, attached drawings used in description of the embodiments are introduced briefly below. Obviously, the attached drawings in the description are only some of the embodiments of the invention. Those skilled in the art can obtain other drawings according to the attached drawings below without any creative work.
Figure 1 is a flowchart of a method for installing software provided in Embodiment 1.
Figure 2 is a flowchart of another software installation method provided in Embodiment 1.
Figure 3 is a flowchart of a software installation method provided in Embodiment 2.
Figure 4 is a flowchart of a software installation method provided in Embodiment 3.
Figure 5 is a flowchart of a software installation method provided in Embodiment 4.
Figure 6 is a structural diagram of a server provided in Embodiment 5.
Figure 7 is a structural diagram of another server provided in Embodiment 5.
Figure 8 is a structural diagram of a mobile terminal provided in Embodiment 6.
Figure 9 is a structural diagram of another mobile terminal provided in Embodiment 6.
Figure 10 is a structural diagram of a system for installing software provided in Embodiment 7.

### Detailed Description of the Invention

In order to better clarify the objectives, technical solutions and advantages of the invention, detailed description is given below on embodiments of the invention in conjunction with the attached drawings.

The embodiments of the invention involve software installation technologies, especially software installation technologies on mobile terminals. The mobile terminals are wireless communication terminals such as a mobile phone and a tablet computer. The software may be software of any type that can be installed on a mobile terminal, such as word, QQ, msn, etc. Besides, installation of software on the mobile terminal in the embodiments is done by backing up the software information on a server, and looking up corresponding installation package and distributing the package to the mobile terminal by the server. When a user backs up software on one mobile terminal and then installs the software on another mobile terminal, the software installation is done across mobile terminals. The invention does not limit the specific application scenario. The server refers to an equipment used to back up the software information and store software installation packages of various versions. The server can backup diversified software information according to a user request, establish and maintain the corresponding relationship between user information and software information, store various types of software and installation packages of various versions so as to distribute them to mobile terminals for software installation.

### Embodiment 1

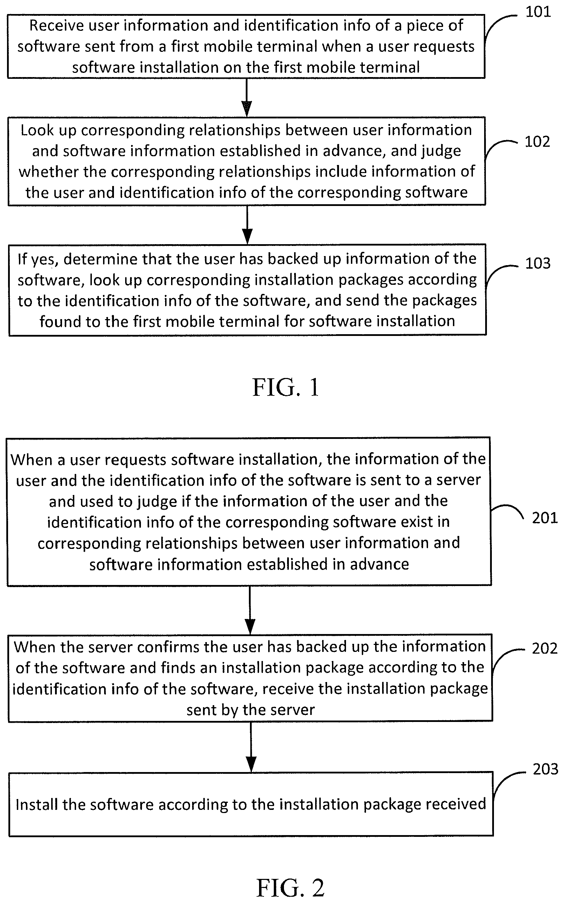

Refer to Figure 1, the embodiment provides a software installation method. The detailed procedure of the method is as follows.

101: Receive user information and identification info of a piece of software sent from a first mobile terminal when a user requests software installation on the first mobile terminal.

102: Look up the corresponding relationship between user information and software information established in advance, and judge whether the corresponding relationship includes information of the user and identification info of the corresponding software.

103: If yes, determine that the user has backed up information of the software, look up corresponding installation packages according to the identification info of the software, and send the packages found to the first mobile terminal for software installation.

Refer to Figure 2, the embodiment provides another software installation method, which includes the following.

201: When a user requests software installation, the information of the user and the identification info of the software is sent to a server and used to judge if the information of the user and the corresponding identification info of the software exist in corresponding relationships between user information and software information established in advance.

202: When the server confirms the user has backed up the information of the software and finds an installation package according to the identification info of the software, receive the installation package sent by the server.

203: Install the software according to the installation package received.

In the method provided by the embodiment, when a user requests to install software on a mobile terminal, the server receives the information of the user and the identification info of the software sent from the mobile terminal, determines that the user has backed up the information of the software according to the pre-established corresponding relationships of user information and software information, looks up the installation package corresponding to the identification info of the software, and sends it to the mobile terminal. The mobile terminal installs the software according to the installation package. It saves the time and data traffic used in looking for installation software on one-by-one basis, improves the software installation efficiency, and reduces the risk associated with software installation of mobile terminals because the installation package found is safe and virus free.

In order to explain the methods provided in the embodiments more specifically, Embodiments 2, 3 and 4 will give more detailed description on methods provided in the embodiments below.

### Embodiment 2

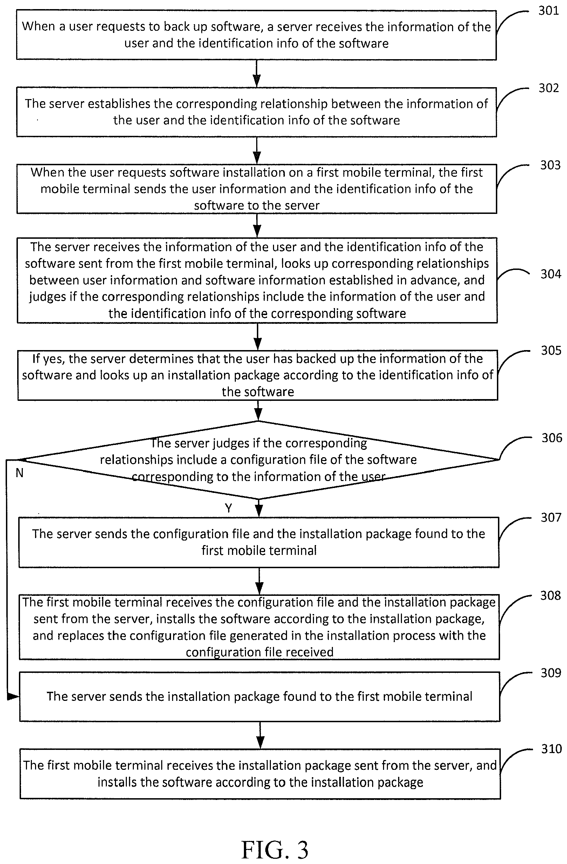

Refer to Figure 3, the embodiment provides a software installation method. A mobile terminal installs software according to installation packages and configuration files sent from a server. The detailed procedure of the method is as follows.

301: When a user requests to back up software, receive the information of the user and the identification info of the software.

The identification info of the software refers to information used to uniquely identify software, including but not limited to a unique identifier (UID), a name, a publisher and a certificate of the software. The information of the user refers to identity information of the user used by the server to authenticate the user identity, including but not limited to a user name and password. When the user requests software installation, the server will authenticate the user according to the user information. If the authentication is passed, execute the installation procedure of the software; otherwise, the procedure ends.

302: The server establishes the corresponding relationship between the information of the user and the identification info of the software.

The server backs up the software by establishing the corresponding relationship between the information of the user and the identification info of the software and storing the corresponding relationship, so that the server can determine according to the corresponding relationship if the user has backed up the software when the user requests to install the software.

303: When a user requests software installation on a first mobile terminal, receive the user information and the identification info of the software sent from the first mobile terminal.

In blocks 301 and 302 of the embodiment, the user backs up the software via the first mobile terminal or other mobile terminals, e.g., the second mobile terminal. The invention has no restriction on this.

For example, an application scenario is that a user backs up a piece of software on mobile terminal A. When the software cannot be used due to exception later on, the software can be reinstalled (or restored) on mobile terminal A according to the backup. Another application scenario is that a user backs up a piece of software on mobile terminal A and wants to install the same software on mobile terminal B later on, then the software can be installed on mobile terminal B according to the backup.

304: When the server receives the information of the user and the identification info of the software sent from the first mobile terminal, it looks up corresponding relationships between user information and software information established in advance, and judges if the corresponding relationships include the information of the user and the identification info of the corresponding software. If yes, execute block 305; if no, the procedure ends or prompts installation failure due to no backup and then ends.

Specifically, the server can authenticate the information of the user first. If the authentication is passed, then look up the corresponding relationships and judge if the corresponding relationships include the information of the user and the identification info of the corresponding software.

305: The server determines that the user has backed up the information of the software and looks up an installation package according to the identification info of the software.

The installation package in this embodiment is used for software installation. A mobile terminal can execute software installation according to the installation package.

Specifically, the resource library of the server stores various versions of software, and each piece of software has installation packages of several versions. Therefore, installation packages of each version can be obtained according to the identification info of the software.

306: The server judges if the corresponding relationships include a configuration file of the software corresponding to the information of the user. If yes, execute block 307; otherwise, execute block 309.

In the embodiment, the configuration file includes some using habit information of the user on the software, including but not limited to a software bookmark, a font size and a background image, which may not be restricted by the invention. The configuration file is backed up on the server together with the identification info of the software during software backup.

Specifically, when a user backs up the information of the software through a mobile terminal, he can set up whether to back up the personalized information of the configuration file. If the user selects yes, the configuration file of the software will also be sent to the server together with the user information and the identification info of the software for backup. If the user selects no, only the user information and the identification info of the software will be sent to the server.

307: The server sends the configuration file and the installation package found to the first mobile terminal, and then executes block 308.

308: The first mobile terminal receives the configuration file and the installation package sent from the server, installs the software according to the installation package, and replaces the configuration file generated in the installation process with the configuration file received. Then, the procedure ends.

Upon receiving the installation package sent from the server, the first mobile terminal can install the software, automatically generate the configuration file in the software installation process, and save the file in a fixed path. When the first mobile terminal receives the configuration file sent from the server, it can replace the configuration file automatically generated with the configuration file received. Since the configuration file includes using habit information of the user, original using habits can be retained after software installation to achieve the same experience with the software at backup.

309: The server sends the installation package found to the first mobile terminal, and then executes block 310.

310: The first mobile terminal receives the installation package sent from the server, and installs the software according to the installation package. Then, the procedure ends.

In the method provided by the embodiment, when a user requests to install software on a mobile terminal, the server receives the user information and the identification info of the software sent from the mobile terminal, determines that the user has backed up the information of the software according to the pre-established corresponding relationships of user information and software information, looks up installation packages corresponding to the identification info of the software, and sends them to the mobile terminal. The mobile terminal installs the software according to the installation packages. It saves the time and data traffic used in looking for installation software on one-by-one basis, improves the software installation efficiency, and reduces the risk associated with software installation of mobile terminals because the installation packages found are safe and virus free.

Further, the server sends the configuration file backed up in advance and the installation packages found to the mobile terminal, and the mobile terminal configures the software according to the configuration file to retain original using habits of the user, which may greatly improve user experience.

### Embodiment 3

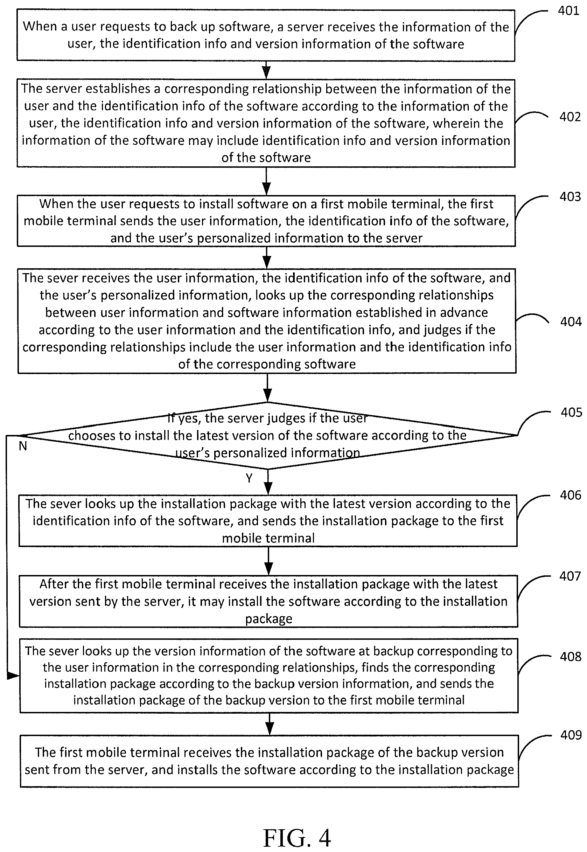

Refer to Figure 4, the embodiment provides a software installation method. A server retrieves corresponding installation package according to the personalized information set by a user of whether to install the software of the latest version, so as to allow the mobile terminal to install the software with corresponding version. The specific procedure of the method is as follows.

401: When the user requests to back up the software, the server receives the information of the user and the identification info of the software.

The identification info of the software refers to information used to uniquely identify software, while the information of the user refers to identity information of the user used by the server to authenticate the user identity. No additional description is made here because it is the same as the description in Embodiment 2.

The version information of the software is used to identify software version. Specifically, it can be a version number of the software, e.g., v1, v2, v2011 or v2012, etc., which is not restricted by the invention.

402: The server establishes a corresponding relationship between the information of the user and the identification info of the software according to the information of the user, the identification info and version information of the software. The information of the software may include identification info and version information of the software.

403: When the user requests to install software on a first mobile terminal, the first mobile terminal sends the user information, the identification info of the software, and the user's personalized information to the server.

The user's personalized information refers to personalized settings made by the user for software installation. The user can perform the setup according to settings provided by a mobile terminal, where there can be one or more settings and no restriction is made by the invention. For example, the mobile terminal may provide a setting of "whether to install the latest version of software". If the user chooses yes, the server may find the latest version of an installation package and send it to the mobile terminal. If the user selects no, the server may find the backup version of the installation package and send it to the mobile terminal. Alternatively, the mobile terminal may provide a setting of "whether to accept a recommended installation package when there is no installation package matching the operating system of the mobile terminal". If the user chooses yes, the server will recommend software with similar functions according to the operating system of the mobile terminal when there is no installation package matching the operating system of the mobile terminal, and send the recommended installation package to the mobile terminal. If the user selects no, the server will not send any installation package to the mobile terminal when there is no installation package matching the operating system of the mobile terminal.

Besides, if the first mobile terminal does not send the user's personalized information, the server will obtain default personalized information. Specifically, the default personalized information can include but not limit to: not to install the latest version of the software, or not to accept the recommended installation package when there is no installation package matching the operating system of the mobile terminal. The invention has no limitation on the default personalized information.

In this embodiment, the user's personalized information sent by the first mobile terminal is a user's setting of whether to install the software with the latest version. Explanation is given below as an example.

In the embodiment, the user backs up the software in blocks 401 and 402 through the first mobile terminal or other mobile terminals, e.g., a second mobile terminal, and the invention has no limitation on the mobile terminal.

404: The sever receives the user information, the identification info of the software, and the user's personalized information sent by the first mobile terminal, looks up the corresponding relationships between user information and software information established in advance according to the user information and the identification info, and judges if the corresponding relationships include the user information and the identification info of the corresponding software. If yes, execute block 405; otherwise, the procedure ends, or prompt the user that the installation fails due to lack of backup and then the procedure ends.

Specifically, the server can authenticate the user information first. If the authentication is passed, look up the corresponding relationships to judge whether there are the user information and the identification info of the corresponding software in the corresponding relationships.

405: When the server determines that the user has backed up the information of the software, judge if the user chooses to install the latest version of the software according to the user's personalized information. If yes, execute block 406; otherwise, execute block 408.

406: The sever looks up the installation package with the latest version according to the identification info of the software, sends the installation package to the first mobile terminal, and then executes block 407.

407: After the first mobile terminal receives the installation package with the latest version sent by the server, it may install the software according to the installation package. Then, the procedure ends.

408: The sever looks up the version information of the software at backup corresponding to the user in the corresponding relationships, finds the corresponding installation package according to the backup version information, sends the installation package of the backup version to the first mobile terminal, and then executes block 409.

The resource library of the server stores various versions of software, and each piece of software has installation packages of several versions. Therefore, installation packages of each version can be obtained according to identification info of the software. Look up corresponding installation packages according to the backup version information of the software, and then send the installation packages to the first mobile terminal.

409: The first mobile terminal receives the installation packages of the backup version sent from the server, and installs the software according to the installation packages. Then, the procedure ends.

Further, the method provided by this embodiment above can also be applied in combination with the method provided in Embodiment 2. The server sends the configuration file backed up in advance to the mobile terminal, so that the mobile terminal can replace the configuration file generated in the installation process with this configuration file. Since the configuration file includes using habit information of the user, original using habits can be retained after software installation to achieve the same experience with the software at backup. After receiving an installation request, the server will look up the configuration file accordingly, and send the installation packages found together with the configuration file to the mobile terminal. The detailed procedure is the same as the description in Embodiment 2, and will not be described in more details.

In the method provided by the embodiment, when a user requests to install software on a mobile terminal, a server receives the user information and the identification info of the software sent from the mobile terminal, determines that the user has backed up the information of the software according to the pre-established corresponding relationships of user information and software information, looks up installation packages corresponding to the identification info of the software, and sends them to the mobile terminal. The mobile terminal installs the software according to the installation packages. It saves the time and data traffic used in looking for installation software on one-by-one basis, improves the software installation efficiency, and reduces the risk associated with software installation of mobile terminals because the installation packages found are safe and virus free.

Further, the server sends the configuration file backed up in advance and the installation packages found to the mobile terminal, and the mobile terminal configures the software according to the configuration file to retain original using habits of the user and greatly improve user experience. Besides, software can be installed according to the personalized information of the user and in different situations according to different user settings. The technical solution has more flexible application and strong practicability, and may improve user satisfaction.

### Embodiment 4

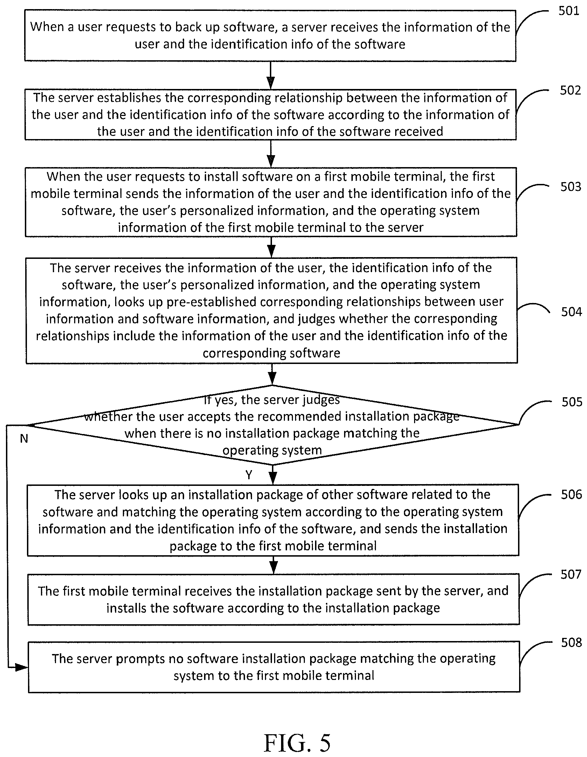

Refer to Figure 5, this embodiment provides a software installation method. A server obtains a corresponding installation package according to user's personalized information set by a user on whether to accept the installation package recommended by the server when there is no installation package matching the operating system, and sends it to a mobile terminal for software installation. The detailed procedure of the method is as follows.

501: When the user requests to back up the software, the server receives the information of the user and the identification info of the software.

502: The server establishes the corresponding relationship between the information of the user and the identification info of the software according to the information of the user and the identification info of the software received.

503: When the user requests to install software on a first mobile terminal, the first mobile terminal sends the information of the user and the identification info of the software, the user's personalized information, and the operating system information of the first mobile terminal to the server.

Refer to the corresponding description on Embodiment 3 for the user's personalized information. No additional description will be given here.

In this embodiment, the user's personalized information sent by the first mobile terminal is a setting on whether to accept the recommended installation package when there is no installation package matching the operating system of the mobile terminal. Explanation is given hereinafter as an example.

In this embodiment, in blocks 501 and 502, the user backs up the software through the first mobile terminal or other mobile terminals such as a second mobile terminal. The invention has no limitation on mobile terminals.

504: The server receives the information of the user, the identification info of the software, the user's personalized information, and the operating system information of the first mobile terminal sent from the first mobile terminal, looks up pre-established corresponding relationships between user information and software information according to the information of the user and the identification info of the software, and judges whether the corresponding relationships include the information of the user and the identification info of the corresponding software. If yes, execute block 505; otherwise, the procedure ends, or prompts installation failure due to no backup and then ends.

Specifically, the server can authenticate the information of the user first. If the authentication is passed, then look up the corresponding relationships and judge if the corresponding relationships include the information of the user and the identification info of the corresponding software.

505: The server confirms that the user has backed up the information of the software, and judges whether the user accepts the recommended installation package when there is no installation package matching the operating system of the first mobile terminal. If yes, execute block 506; otherwise, execute block 508.

506: The server looks up an installation package of other software related to the software and matching the operating system according to the operating system information and the identification info of the software, sends the installation package to the first mobile terminal, and then executes block 507.

The server can look up other software with similar functions to the software backed up by the user, and recommend it to the first mobile terminal. Specifically, if there are several pieces of other software with similar functions, the server can compare description information of the software, choose the best software according to user voting in the description information, and send the corresponding installation package to the first mobile terminal.

507: The first mobile terminal receives the installation package sent by the server, and installs the software according to the installation package. The procedure ends.

508: The server prompts no software installation package matching the operating system to the first mobile terminal, and the procedure ends.

Further, the method provided by this embodiment above can also be applied in combination with the method provided in Embodiment 2. After finding the installation package matching the operating system according to the operating system information of the first mobile terminal, the server sends the configuration file backed up by the user together with the installation package to the mobile terminal, so that the mobile terminal can replace the configuration file generated in the installation process with this configuration file. Since the configuration file includes using habit information of the user, original using habits can be retained after software installation to achieve the same experience with the software at backup. Specifically, the user backs up the configuration file of the software on the server in advance, and the server may look up the configuration file accordingly after receiving an installation request and then send the installation package found to the mobile terminal. The detailed procedure is the same as the description in Embodiment 2, and will not be described in more details here.

Or, the method provided by this embodiment above can also be applied in combination with the methods provided in Embodiments 2 and 3. After finding the installation package matching the operating system according to the user's personalized information and the operating system information of the first mobile terminal, the server sends the configuration file backed up by the user together with the installation package matching the operating system to the mobile terminal, so that the mobile terminal can replace the configuration file automatically generated in the installation process with this configuration file after software installation. The detailed procedure is the same as above and will not be described in more details here.

In the method provided by the embodiment, when a user requests to install software on a mobile terminal, a server receives the user information and the identification info of the software sent from the mobile terminal, determines that the user has backed up the information of the software according to pre-established corresponding relationships of user information and software information, looks up installation packages corresponding to the identification info of the software, and sends them to the mobile terminal. The mobile terminal installs the software according to the installation packages. It saves the time and data traffic used in looking for software on one-by-one basis for installation, improves the software installation efficiency, and reduces the risk associated with software installation of mobile terminals because the installation packages found are safe and virus free.

Further, the server sends the configuration file backed up in advance and the installation packages found to the mobile terminal, and the mobile terminal configures the software according to the configuration file to retain original using habits of the user and to greatly improve user experience. Besides, software can be installed according to the personalized information of the user and in different situations according to different user settings. The technical solution has more flexible application and strong practicability, and improves user satisfaction.

### Embodiment 5

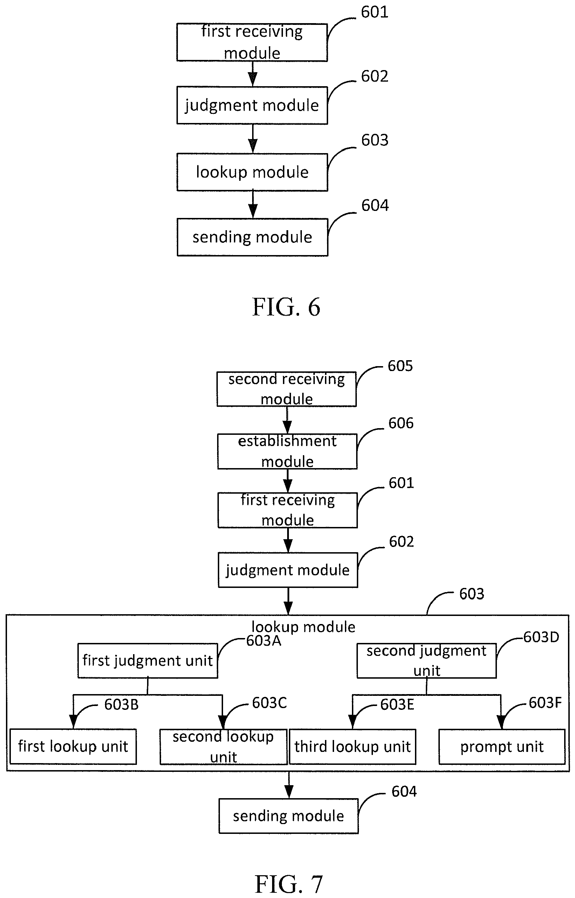

Refer to Figure 6, this embodiment provides a server, including the following modules.

A first receiving module 601 is used to receive user information and identification info of software sent from a first mobile terminal when a user requests to install the software on the first mobile terminal.

A judgment module 602 is used to look up corresponding relationships between user information and software information established in advance, and judge if the corresponding relationships include the information of the user and the identification info of the corresponding software.

A lookup module 603 is used to determine that the user has backed up the software information when the judgment module 602 determines that the corresponding relationships include the information of the user and the identification info of the corresponding software and looks up a corresponding installation package according to the software.

A sending module 604 is used to send the installation package found by the lookup module 603 to the first mobile terminal, so that the first mobile terminal may install the software.

In this embodiment, the server also includes the following modules, which may refer to Figure 7.

A second receiving module 605 is used to receive the information of the user and the identification info of the software when the user requests to back up the software.

An establishment module 606 is used to establish a corresponding relationship between the information of the user and the identification info of the software.

In the embodiment, the judgment module 602 is also used to judge if the corresponding relationships include a configuration file of the software corresponding to the information of the user.

The sending module 604 is also used to send the configuration file to the first mobile terminal when the judgment module 602 determines that the corresponding relationships include the configuration file of the software corresponding to the information of the user, so that the first mobile terminal may replace the configuration file generated in the installation process after the installation of the software.

In the embodiment, the first receiving module 601 is also used to receive the personalized information of the user sent from the first mobile terminal.

Accordingly, the lookup module 603 includes the following units.

A first judgment unit 603A is used to judge if the user chooses to install the latest version of the software according to the personalized information of the user.

A first lookup unit 603B is used to look up the installation package of the latest version corresponding to the identification info of the software when the first judgment unit 603A determines that the user chooses to install the latest version of the software.

A second lookup unit 603C is used to look up the version information of the software at backup corresponding to the information of the user found in the corresponding relationships when the first judgment unit 603A judges that the user chooses not to install the latest version of the software, and look up a corresponding installation package according to the version information found.

In this embodiment, the first receiving module 601 is also used to receive the personalized information of the user sent from the first mobile terminal and the operating system information of the first mobile terminal.

Accordingly, the lookup module 603 includes the following units.

A second judgment unit 603D is used to judge if the user chooses to accept a recommended installation package when there is no installation package matching the operating system of the first mobile terminal according to the personalized information of the user and the operating system information of the first mobile terminal.

A third lookup unit 603E is used to look up the installation package of other software matching the operating system of the first mobile terminal and relating to the software according to the identification info of the software and the operating system information of the first mobile terminal when the second judgment unit 603D judges that the user chooses to accept the recommended installation package when there is no installation package matching the operating system of the first mobile terminal.

A prompt unit 603F is used to prompt that there is no installation package of the software matching the operating system of the first mobile terminal and end the operation when the second judgment unit 603D judges that the user chooses not to accept the recommended installation package when there is no installation package matching the operating system of the first mobile terminal.

The server provided in this embodiment can execute software installation methods provided in the embodiments above. Refer to the descriptions in the embodiments for the detailed procedures.

With the server provided in the embodiment, when a user requests to install software on a mobile terminal, a server may receive user information and identification info of software sent from the mobile terminal, determines that the user has backed up the information of the software according to pre-established corresponding relationships of user information and software information, looks up installation packages corresponding to the identification info of the software, and sends them to the mobile terminal. The mobile terminal installs the software according to the installation packages. It saves the time and data traffic used in looking for installation software on one-by-one basis, improves the software installation efficiency, and reduces the risk associated with software installation of mobile terminals because the installation packages found are safe and virus free.

Further, the server sends a configuration file backed up in advance and the installation packages found to the mobile terminal, and the mobile terminal configures the software according to the configuration file to retain original using habits of the user, which may greatly improve user experience. Besides, software can be installed according to the personalized information of the user and in different situations according to different user settings. The technical solution has more flexible applications and strong practicability, and may improve user satisfaction.

### Embodiment 6

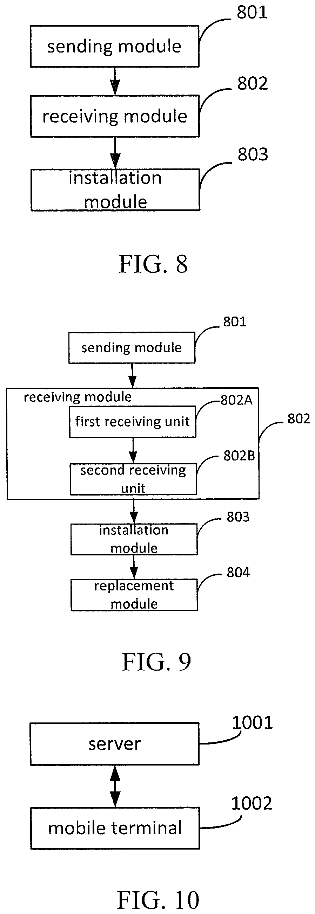

Refer to Figure 8, this embodiment provides a mobile terminal including the following modules.

A sending module 801 is used to send user information and identification info of software to a server when a user requests software installation and allows the server to judge if pre-established corresponding relationships between user information and software information include the information of the user and the identification info of the software.

A receiving module 802 is used to receive an installation package sent from the server when the server determines that the user has backed up the information of the software and found the corresponding installation package according to the identification info of the software.

An installation module 803 is used to install the software according to the installation package received by the receiving module 802.

In this embodiment, refer to Figure 9, the receiving module 802 is also used to receive the configuration file of the software corresponding to the information of the user sent by the server. The configuration file is backed up by the user and saved in the corresponding relationship by the server.

Accordingly, the mobile terminal also includes: a replacement module 804, which replaces the configuration file generated in the installation process with the configuration file received by the receiving module 802.

In this embodiment, the sending module 801 is also used to send the personalized information of the user to the server if the user has set up the personalized information on whether to install the latest version of the software.

Accordingly, the receiving module 802 includes the following units.

A first receiving unit 802A is used to receive the installation package of the latest version corresponding to the identification info of the software sent by the server when the server determines that the user chooses to install the latest version of the software according to the personalized information of the user.

A second receiving unit 802B is used to receive the corresponding installation package found according to the version information of the software at backup and sent by the server when the server determines that the user chooses to install the backup version of the software according to the personalized information of the user.

In the embodiment, the sending module 801 is also used to send the personalized information and local operating system information to the server if the user has set up the personalized information on whether to accept the recommended installation package when there is no installation package mating the local operating system.

Accordingly, the receiving module 802 is used to receive the installation package of other software sent by the server which matches the operating system and relates to the software, when the server determines according to the personalized information of the user and the operating system information that the user chooses to accept the recommended installation package when there is no installation package matching the operating system.

The server provided in this embodiment can execute any software installation method provided in any of the embodiments above. Refer to the descriptions in the embodiments for the detailed procedures.

With the mobile terminal provided by the embodiment, when a user requests to install software on a mobile terminal, a server receives the user information and the identification info of the software sent from the mobile terminal, determines that the user has backed up the information of the software according to the pre-established corresponding relationships of user information and software information, looks up installation packages corresponding to the identification info of the software, and sends them to the mobile terminal. The mobile terminal installs the software according to the installation packages. It saves the time and data traffic used in looking for installation software on one-by-one basis, improves the software installation efficiency, and reduces the risk associated with software installation of mobile terminals because the installation packages found are safe and virus free.

Further, the server sends a configuration file backed up in advance and the installation packages found to the mobile terminal, and the mobile terminal configures the software according to the configuration file to retain original using habits of the user, which may greatly improve user experience. Besides, software can be installed according to the personalized information of the user and in different situations according to different user settings. The technical solution has more flexible applications and strong practicability, and may improve user satisfaction.

### Embodiment 7

Refer to Figure 10, this embodiment provides a software installation system, including a server 1001 and a mobile terminal 1002.

The server 1001 can be a server provided in Embodiment 5, and the mobile terminal 1002 can be a mobile terminal provided in Embodiment 6.

The system provided in this embodiment can execute any software installation method provided in any of the embodiments above. Refer to the descriptions in the embodiments for the detailed procedures.

With the system provided in the embodiment, when a user requests to install software on a mobile terminal, a server receives the user information and the software identification info sent from the mobile terminal, determines that the user has backed up the information of the software according to the pre-established corresponding relationships of user information and software information, looks up installation packages corresponding to the identification info of the software, and sends them to the mobile terminal. The mobile terminal installs the software according to the installation packages. It saves the time and data traffic used in looking for installation software on one-by-one basis, improves the software installation efficiency, and reduces the risk associated with software installation of mobile terminals because the installation packages found are safe and virus free.

Further, the server sends a configuration file backed up in advance and the installation packages found to the mobile terminal, and the mobile terminal configures the software according to the configuration file to retain original using habits of the user to greatly improve user experience. Besides, software can be installed according to the personalized information of the user and in different situations according to different user settings. The technical solution may have more flexible application and strong practicability, and improve user satisfaction.

It should be noted that when the device or system provided in the above embodiments installs software, division of functional modules described above may be used as an example. In actual applications, the above functions can be distributed to different functional modules according to requirements. That is, the internal structure of the device may be divided into different functional modules to fulfill all or part of the functions above. Besides, the server, the mobile terminal, the software installation system, and the method provided in the above embodiments are of the same conception. The method embodiments may be referred to for detailed implementations. No detailed description will be given here repeatedly.

The serial numbers of embodiments are for description purpose only and do not imply the advantages and disadvantages of the embodiments.

All or part of the embodiments can be realized through software, and corresponding software programs can be stored in readable storage media, e.g., a compact disc or a hard disk.

The preferred embodiments described above are all exemplary in nature only and should not be construed as restrictions to the present invention in any way. Any modifications, variations, equivalent replacements and improvements, which are apparent to those skilled in the art without departing from the scope of the present invention, are intended to be within the scope of the following claims.

## Claims

1. A software installation method performed at a server, comprising:
when a user requests to back up software, (301) receiving user information and identification info of the software sent from a first mobile terminal; and establishing (302) a corresponding relationship between the user information and the identification info of the software at the server;
when the user requests to install the software (303) that has been backed up at the server onto a second mobile terminal, receiving the information of the user and the identification info of the software sent from the second mobile terminal; and looking up corresponding relationships (304) between user information and software information established in advance, and judging whether the corresponding relationships include the information of the user and the identification info of the corresponding software;
if yes, confirming that the user has backed up the software information, looking up an installation package (305) corresponding to the identification info of the software, and sending the installation package found to the second mobile terminal for installation of the software;
wherein receiving the information of the user and the identification info of the software sent from the second mobile terminal further comprises: receiving personalized information of the user and information of an operating system of the second mobile terminal sent from the second mobile terminal, wherein the personalized information of the user is set by the user on whether to accept an installation package recommended by the server when there is no installation package matching the operating system of the second mobile terminal; and
looking up an installation package corresponding to the identification info of the software comprises:
according to the personalized information of the user and the information of the operating system of the second mobile terminal, judging whether the user chooses to accept a recommended installation package when there is no installation package matching the operating system of the second mobile terminal;
if yes, looking up an installation package of other software relating to the software that matches the operating system of the second mobile terminal;
otherwise, prompting no installation package of the software matching the operating system of the second mobile terminal.

2. The method according to claim 1, wherein judging whether the corresponding relationships include the information of the user and the identification info of the corresponding software further comprises:
judging whether the corresponding relationships include the information of the user and a configuration file of the corresponding software; and
if yes, sending the configuration file to the second mobile terminal, wherein the configuration file is used to replace a configuration file generated during the installation of the software on the second mobile terminal.

3. A software installation method performed at a mobile terminal, comprising:
when a user requests to install software (201) that has been backed up at a server via another mobile terminal, sending information of the user and identification info of the software to the server, wherein the information of the user and the identification info of the software are used by the server to judge whether the information of the user and the identification info of the corresponding software exist in corresponding relationships between user information and software information established in advance;
when the server confirms (202) that the user has backed up the software information and finds an installation package according to the identification info of the software, receiving the installation package sent by the server; and installing the software according to the installation package received;
wherein sending the information of the user and the identification info of the software to the server further comprises:
if the user sets personalized information concerning whether to accept a recommended installation package when there is no installation package matching a local operating system, sending the personalized information of the user and information of the local operating system to the server; and
receiving the installation package sent by the server comprises:
when the sever determines, according to the personalized information of the user and the information of the local operating system, that the user chooses to accept the recommended installation package (203) when there is no installation package matching the operating system, accepting an installation package of other software sent by the server related to the software and matching the operating system.

4. The method according to claim 3, wherein receiving the installation package sent by the server further comprises: receiving a configuration file of the software corresponding to the information of the user sent by the user, wherein the configuration file is backed up by the user and saved in the corresponding relationships by the server; and
installing the software according to the installation package received further comprises: replacing a configuration file generated during the installation with the configuration file received.

5. A server, comprising:
a second receiving module, (605) configured to receive information of a user and identification info of software sent from a first mobile terminal when the user requests to back up the software at the server;
an establishment module, (606) configured to establish a corresponding relationship between the information of the user and the identification info of the software at the server;
a first receiving module, (601) configured to receive the information of the user and the identification info of the software sent from a second mobile terminal when the user requests to install the software on the second mobile terminal;
a judgment module, (602) configured to look up corresponding relationships between user information and the software information established in advance, and judge whether the corresponding relationships include the information of the user and the identification info of the corresponding software;
a lookup module, (603) configured to determine that the user has backed up the software information when the judgment module determines that the corresponding relationships include the information of the user and the identification info of the corresponding software, and look up an installation package corresponding to the software; and
a sending module, (604) configured to send the installation package found by the lookup module to the second mobile terminal, wherein the installation package is configured to install the software on the second mobile terminal;
wherein the first receiving module is further configured to receive the personalized information of the user sent from the second mobile terminal and information of the operating system of the second mobile terminal, wherein the personalized information of the user is set by the user on whether to accept an installation package recommended by the server when there is no installation package matching the operating system of the second mobile terminal; and
the lookup module comprises:
a second judgment unit, configured to judge whether the user chooses to accept the recommended installation package when there is no installation package matching the operating system of the second mobile terminal according to the personalized information of the user and the information of the operating system of the second mobile terminal;
a third lookup unit, configured to look up an installation package of other software matching the operating system of the second mobile terminal and relating to the software according to the identification info of the software and the information of the operating system of the second mobile terminal when the second judgment unit determines that the user chooses to accept the recommended installation package when there is no installation package matching the operating system of the second mobile terminal; and
a prompt unit, configured to prompt that there is no installation package of the software matching the operating system of the second mobile terminal when the second judgment unit determines that the user chooses not to accept the recommended installation package when there is no installation package matching the operating system of the second mobile terminal.

6. The server according to claim 5, wherein the judgment module is further configured to judge whether the corresponding relationships include a configuration file of the software corresponding to the information of the user; and
the sending module is further configured to send the configuration file to the second mobile terminal when the judgment module determines that the corresponding relationships include the configuration file of the software corresponding to the information of the user, wherein the configuration file is used to replace a configuration file generated during the installation after the software is installed on the second mobile terminal.

7. A mobile terminal, comprising:
a sending module, (801) configured to send information of a user and identification info of software to a server when the user requests to install the software that has been backed up at the server via another mobile terminal, wherein the server judges whether the established corresponding relationships between user information and software information include the information of the user and the identification info of the software;
a receiving module, (802) configured to receive an installation package sent from the server when the server determines that the user has backed up the information of the software and found corresponding installation package according to the identification info of the software; and
an installation module, (803) configured to install the software according to the installation package received by the receiving module;
wherein the sending module is further configured to send the personalized information and information of the local operating system to the server if the user has set up the personalized information concerning whether to accept the recommended installation package when there is no installation package matching the local operating system; and
the receiving module is configured to receive the installation package of other software related to the software that is sent by the server and matches the operating system when the server determines according to the personalized information of the user and the information of the operating system that the user chooses to accept the recommended installation package when there is no installation package matching the operating system.

8. The mobile terminal according to claim 7, wherein the receiving module is further configured to receive a configuration file of the software corresponding to the information of the user sent by the server, wherein the configuration file is backed up by the user and saved in the corresponding relationships by the server;
the mobile terminal further comprises: a replacement module, (804) configured to replace a configuration file generated in the installation process with the configuration file received by the receiving module; and
the sending module is further configured to send personalized information of the user to the server if the user has set up the personalized information concerning whether to install the latest version of the software.

## Patentansprüche

1. Softwareinstallationsverfahren, das an einem Server durchgeführt wird, umfassend:
wenn ein Benutzer anfordert, Software zu sichern (301), Empfangen von Benutzerinformation und Identifikationsinfo der Software, die von einem ersten mobilen Endgerät gesendet wurden; und Ermitteln (302) einer entsprechenden Beziehung zwischen der Benutzerinformation und der Identifikationsinfo der Software an dem Server;
wenn der Benutzer anfordert, die Software, die an dem Server gesichert wurde, auf einem zweiten mobilen Endgerät zu installieren (303), Empfangen der Information des Benutzers und der Identifikationsinfo der Software, die von dem zweiten mobilen Endgerät gesendet wurden; und Suchen nach entsprechenden Beziehungen (304) zwischen Benutzerinformation und Softwareinformation, die im Voraus ermittelt wurden, und Beurteilen, ob die entsprechenden Beziehungen die Information des Benutzers und die Identifikationsinfo der entsprechenden Software umfassen;
falls ja, Bestätigen, dass der Benutzer die Softwareinformation gesichert hat, Suchen nach einem Installationspaket (305), das der Identifikationsinfo der Software entspricht, und Senden des gefundenen Installationspakets an das zweite mobile Endgerät zur Installation der Software;
wobei das Empfangen der Information des Benutzers und der Identifikationsinfo der Software, die von dem zweiten mobilen Endgerät gesendet wurden, weiterhin umfasst: Empfangen von personalisierter Information des Benutzers und Information eines Betriebssystems des zweiten mobilen Endgeräts, die von dem zweiten mobilen Endgerät gesendet wurden, wobei die personalisierte Information des Benutzers durch den Benutzer dahingehend eingestellt wird, ob ein Installationspaket, das von dem Server empfohlen wird, akzeptiert werden soll, wenn kein Installationspaket vorliegt, das mit dem Betriebssystem des zweiten mobilen Endgeräts übereinstimmt; und
wobei Suchen nach einem Installationspaket, das der Identifikationsinfo der Software entspricht, umfasst:
gemäß der personalisierten Information des Benutzers und der Information des Betriebssystems des zweiten mobilen Endgeräts Beurteilen, ob der Benutzer wählt, ein empfohlenes Installationspaket zu akzeptieren, wenn kein Installationspaket vorliegt, das mit dem Betriebssystem des zweiten mobilen Endgeräts übereinstimmt;
falls ja, Suchen nach einem Installationspaket einer anderen Software, die mit der Software zusammenhängt, die mit dem Betriebssystem des zweiten mobilen Endgeräts übereinstimmt;
andernfalls Eingeben keines Installationspakets der Software, das mit dem Betriebssystem des zweiten mobilen Endgeräts übereinstimmt.

2. Verfahren nach Anspruch 1, wobei das Beurteilen, ob die entsprechenden Beziehungen die Information des Benutzers und die Identifikationsinfo der entsprechenden Software umfassen, weiterhin umfasst:
Beurteilen, ob die entsprechenden Beziehungen die Information des Benutzers und eine Konfigurationsdatei der entsprechenden Software umfassen; und
falls ja, Senden der Konfigurationsdatei an das zweite mobile Endgerät, wobei die Konfigurationsdatei dazu verwendet wird, eine Konfigurationsdatei zu ersetzen, die während der Installation der Software auf dem zweiten mobilen Endgerät erzeugt wurde.

3. Softwareinstallationsverfahren, das an einem mobilen Endgerät durchgeführt wird, umfassend:
wenn ein Benutzer anfordert, Software, die an einem Server gesichert wurde, mittels eines anderen mobilen Endgeräts zu installieren (201), Senden von Information des Benutzers und einer Identifikationsinfo der Software an den Server, wobei die Information des Benutzers und die Identifikationsinfo der Software von dem Server dazu verwendet werden zu beurteilen, ob die Information des Benutzers und die Identifikationsinfo der entsprechenden Software in entsprechenden Beziehungen zwischen einer Benutzerinformation und einer Softwareinformation, die im Voraus ermittelt wurden, existieren;
wenn der Server bestätigt (202), dass der Benutzer die Softwareinformation gesichert hat, und ein Installationspaket gemäß der Identifikationsinfo der Software findet, Empfangen des Installationspakets, das von dem Server gesendet wurde; und Installieren der Software gemäß dem empfangenen Installationspaket;
wobei Senden der Information des Benutzers und der Identifikationsinfo der Software an den Server weiterhin umfasst:
wenn der Benutzer personalisierte Information in Bezug darauf einstellt, ob ein empfohlenes Installationspaket akzeptiert werden soll, wenn kein Installationspaket vorliegt, das mit einem lokalen Betriebssystem übereinstimmt, Senden der personalisierten Information des Benutzers und Information des lokalen Betriebssystems an den Server; und
wobei Empfangen des Installationspakets, das von dem Server gesendet wurde, umfasst:
wenn der Server gemäß der personalisierten Information des Benutzers und der Information des lokalen Betriebssystems bestimmt, dass der Benutzer wählt, das empfohlene Installationspaket zu akzeptieren (203), wenn kein Installationspaket vorliegt, das mit dem Betriebssystem übereinstimmt, Akzeptieren eines Installationspakets einer von dem Server gesendeten anderen Software, die mit der Software zusammenhängt und mit dem Betriebssystem übereinstimmt.

4. Verfahren nach Anspruch 3, wobei Empfangen des Installationspakets, das von dem Server gesendet wurde, weiterhin umfasst: Empfangen einer Konfigurationsdatei der Software, die der Information des Benutzers entspricht, die von dem Benutzer gesendet wurde, wobei die Konfigurationsdatei von dem Benutzer gesichert wird und in den entsprechenden Beziehungen durch den Server gespeichert wird; und
Installieren der Software gemäß dem empfangenen Installationspaket weiterhin umfasst: Ersetzen einer Konfigurationsdatei, die während der Installation erzeugt wurde, durch die empfangene Konfigurationsdatei.

5. Server, umfassend:
ein zweites Empfangsmodul (605), das dazu konfiguriert ist, Information eines Benutzers und Identifikationsinfo einer Software, die von einem ersten mobilen Endgerät gesendet wurden, zu empfangen, wenn der Benutzer anfordert, die Software an dem Server zu sichern;
ein Ermittlungsmodul (606), das dazu konfiguriert ist, eine entsprechende Beziehung zwischen der Information des Benutzers und der Identifikationsinfo der Software an dem Server zu ermitteln;
ein erstes Empfangsmodul (601), das dazu konfiguriert ist, die Information des Benutzers und die Identifikationsinfo der Software, die von dem zweiten mobilen Endgerät gesendet wurden, zu empfangen, wenn der Benutzer anfordert, die Software auf dem zweiten mobilen Endgerät zu installieren;
ein erstes Beurteilungsmodul (602), das dazu konfiguriert ist, nach entsprechenden Beziehungen zwischen einer Benutzerinformation und der Softwareinformation, die im Voraus ermittelt wurden, zu suchen und zu beurteilen, ob die entsprechenden Beziehungen die Information des Benutzers und die Identifikationsinfo der entsprechenden Software umfassen;
ein Suchmodul (603), das dazu konfiguriert ist zu bestimmen, dass der Benutzer die Softwareinformation gesichert hat, wenn das Beurteilungsmodul bestimmt, dass die entsprechenden Beziehungen die Information des Benutzers und die Identifikationsinfo der entsprechenden Software umfassen, und nach einem Installationspaket zu suchen, das der Software entspricht; und
ein Sendemodul (604), das dazu konfiguriert ist, das Installationspaket, das von dem Suchmodul gefunden wurde, an das zweite mobile Endgerät zu senden, wobei das Installationspaket dazu konfiguriert ist, die Software auf dem zweiten mobilen Endgerät zu installieren;
wobei das erste Empfangsmodul weiterhin dazu konfiguriert ist, die personalisierte Information des Benutzers, die von dem zweiten mobilen Endgerät gesendet wurde, und eine Information des Betriebssystems des zweiten mobilen Endgeräts zu empfangen, wobei die personalisierte Information des Benutzers durch den Benutzer dahingehend eingestellt wird, ob ein Installationspaket, das von dem Server empfohlen wird, akzeptiert werden soll, wenn kein Installationspaket vorliegt, das mit dem Betriebssystem des zweiten mobilen Endgeräts übereinstimmt; und
das Suchmodul umfasst:
eine zweite Beurteilungseinheit, die dazu konfiguriert ist, gemäß der personalisierten Information des Benutzers und der Information des Betriebssystems des zweiten mobilen Endgeräts zu beurteilen, ob der Benutzer wählt, das empfohlene Installationspaket zu akzeptieren, wenn kein Installationspaket vorliegt, das mit dem Betriebssystem des zweiten mobilen Endgeräts übereinstimmt;
eine dritte Sucheinheit, die dazu konfiguriert ist, gemäß der Identifikationsinfo der Software und der Information des Betriebssystems des zweiten mobilen Endgeräts nach einem Installationspaket einer anderen Software, die mit dem Betriebssystem des zweiten mobilen Endgeräts übereinstimmt und mit der Software zusammenhängt, zu suchen, wenn die zweite Beurteilungseinheit bestimmt, dass der Benutzer wählt, das empfohlene Installationspaket zu akzeptieren, wenn kein Installationspaket vorliegt, das mit dem Betriebssystem des zweiten mobilen Endgeräts übereinstimmt; und
eine Eingabeeinheit, die dazu konfiguriert ist einzugeben, dass kein Installationspaket der Software vorliegt, das mit dem Betriebssystem des zweiten mobilen Endgeräts übereinstimmt, wenn die zweite Beurteilungseinheit bestimmt, dass der Benutzer wählt, das empfohlene Installationspaket nicht zu akzeptieren, wenn kein Installationspaket vorliegt, das mit dem Betriebssystem des zweiten mobilen Endgeräts übereinstimmt.

6. Server nach Anspruch 5, wobei das Beurteilungsmodul weiterhin dazu konfiguriert ist zu beurteilen, ob die entsprechenden Beziehungen eine Konfigurationsdatei der Software, die der Information des Benutzers entspricht, umfassen; und
das Sendemodul weiterhin dazu konfiguriert ist, die Konfigurationsdatei an das zweite mobile Endgerät zu senden, wenn das Beurteilungsmodul bestimmt, dass die entsprechenden Beziehungen die Konfigurationsdatei der Software, die der Information des Benutzers entspricht, umfassen, wobei die Konfigurationsdatei dazu verwendet wird, eine Konfigurationsdatei zu ersetzen, die während der Installation erzeugt wurde, nachdem die Software auf dem zweiten mobilen Endgerät installiert wurde.

7. Mobiles Endgerät, umfassend:
ein Sendemodul (801), das dazu konfiguriert ist, Information eines Benutzers und Identifikationsinfo einer Software an einen Server zu senden, wenn der Benutzer anfordert, die Software, die an dem Server gesichert wurde, mittels eines anderen mobilen Endgeräts zu installieren, wobei der Server beurteilt, ob die ermittelten entsprechenden Beziehungen zwischen einer Benutzerinformation und einer Softwareinformation die Information des Benutzers und die Identifikationsinfo der Software umfassen;
ein Empfangsmodul (802), das dazu konfiguriert ist, ein Installationspaket, das von dem Server gesendet wurde, zu empfangen, wenn der Server bestimmt, dass der Benutzer die Information der Software gesichert und ein entsprechendes Installationspaket gemäß der Identifikationsinfo der Software gefunden hat; und
ein Installationsmodul (803), das dazu konfiguriert ist, die Software gemäß dem Installationspaket, das von dem Empfangsmodul empfangen wurde, zu installieren;
wobei das Sendemodul weiterhin dazu konfiguriert ist, die personalisierte Information und eine Information des lokalen Betriebssystems an den Server zu senden, wenn der Benutzer die personalisierte Information dahingehend eingestellt hat, ob das empfohlene Installationspaket akzeptiert werden soll, wenn kein Installationspaket vorliegt, das mit dem lokalen Betriebssystem übereinstimmt; und
das Empfangsmodul dazu konfiguriert ist, das Installationspaket einer mit der Software zusammenhängen anderen Software, die von dem Server gesendet wurde und mit dem Betriebssystem übereinstimmt, zu empfangen, wenn der Server gemäß der personalisierten Information des Benutzers und der Information des Betriebssystems bestimmt, dass der Benutzer wählt, das empfohlene Installationspaket zu akzeptieren, wenn kein Installationspaket vorliegt, das mit dem Betriebssystem übereinstimmt.

8. Mobiles Endgerät nach Anspruch 7, wobei das Empfangsmodul weiterhin dazu konfiguriert ist, eine Konfigurationsdatei der Software, die der Information des Benutzers entspricht, die von dem Server gesendet wurde, zu empfangen, wobei die Konfigurationsdatei von dem Benutzer gesichert wird und in den entsprechenden Beziehungen durch den Server gespeichert wird;
das mobile Endgerät weiterhin umfasst: ein Ersetzungsmodul (804), das dazu konfiguriert ist, eine Konfigurationsdatei, die in dem Installationsvorgang erzeugt wurde, durch die Konfigurationsdatei, die von dem Empfangsmodul empfangen wurde, zu ersetzen; und
das Sendemodul weiterhin dazu konfiguriert ist, eine personalisierte Information des Benutzers an den Server zu senden, wenn der Benutzer die personalisierte Information dahingehend eingestellt hat, ob die neueste Version der Software installiert werden soll.

## Revendications

1. Procédé d'installation de logiciel réalisé au niveau d'un serveur, comprenant :
lorsqu'un utilisateur demande de sauvegarder un logiciel, (301) recevoir des informations d'utilisateur et des informations d'identification du logiciel envoyées par un premier terminal mobile ; et établir (302) une relation correspondante entre les informations d'utilisateur et les informations d'identification du logiciel au niveau du serveur ;
lorsque l'utilisateur demande d'installer le logiciel (303) qui a été sauvegardé au niveau du serveur sur un second terminal mobile, recevoir les informations de l'utilisateur et les informations d'identification du logiciel envoyées par le second terminal mobile ; et rechercher des relations de correspondance (304) entre des informations d'utilisateur et des informations de logiciel établies à l'avance, et déterminer si les relations de correspondance comprennent ou non les informations de l'utilisateur et les informations d'identification du logiciel correspondant ;
si tel est le cas, confirmer le fait que l'utilisateur a sauvegardé les informations de logiciel, rechercher un progiciel d'installation (305) correspondant aux informations d'identification du logiciel, et envoyer le progiciel d'installation trouvé au second terminal mobile pour une installation du logiciel ;
dans lequel la réception des informations de l'utilisateur et des informations d'identification du logiciel envoyées par le second terminal mobile comprend en outre : recevoir des informations personnalisées de l'utilisateur et des informations d'un système d'exploitation du second terminal mobile envoyées par le second terminal mobile, les informations personnalisées de l'utilisateur étant réglées par l'utilisateur quant au point de savoir d'accepter ou non un progiciel d'installation recommandé par le serveur lorsqu'il n'existe pas de progiciel d'installation correspondant au système d'exploitation du second terminal mobile ; et
la recherche d'un progiciel d'installation correspondant aux informations d'identification du logiciel comprend :
en fonction des informations personnalisées de l'utilisateur et des informations du système d'exploitation du second terminal mobile, déterminer si l'utilisateur choisit ou non d'accepter un progiciel d'installation recommandé lorsqu'il n'existe pas de progiciel d'installation correspondant au système d'exploitation du second terminal mobile ;
si tel est le cas, rechercher un progiciel d'installation d'un autre logiciel concernant le logiciel qui correspond au système d'exploitation du second terminal mobile ;
autrement, ne suggérer aucun progiciel d'installation du logiciel correspondant au système d'exploitation du second terminal mobile.

2. Procédé selon la revendication 1, dans lequel la détermination du point de savoir si les relations de correspondance comprennent ou non les informations de l'utilisateur et les informations d'identification du logiciel correspondant comprend en outre :
déterminer si les relations de correspondance comprennent ou non les informations de l'utilisateur et un fichier de configuration du logiciel correspondant ; et
si tel est le cas, envoyer le fichier de configuration au second terminal mobile, le fichier de configuration étant utilisé pour remplacer un fichier de configuration généré pendant l'installation du logiciel sur le second terminal mobile.

3. Procédé d'installation de logiciel réalisé au niveau d'un terminal mobile, comprenant :
lorsqu'un utilisateur demande d'installer un logiciel (201) qui a été sauvegardé au niveau d'un serveur par l'intermédiaire d'un autre terminal mobile, envoyer des informations de l'utilisateur et des informations d'identification du logiciel au serveur, les informations de l'utilisateur et les informations d'identification du logiciel étant utilisées par le serveur pour déterminer si les informations de l'utilisateur et les informations d'identification du logiciel correspondant existent ou non dans des relations de correspondance entre des informations d'utilisateur et des informations de logiciel établies à l'avance ;
lorsque le serveur confirme (202) le fait que l'utilisateur a sauvegardé les informations de logiciel et trouve un progiciel d'installation selon les informations d'identification du logiciel, recevoir le progiciel d'installation envoyé par le serveur ; et installer le logiciel selon le progiciel d'installation reçu ;
dans lequel l'envoi des informations de l'utilisateur et des informations d'identification du logiciel au serveur comprend en outre :
si l'utilisateur règle des informations personnalisées concernant le point de savoir d'accepter ou non un progiciel d'installation recommandé lorsqu'il n'existe pas de progiciel d'installation correspondant à un système d'exploitation local, envoyer les informations personnalisées de l'utilisateur et des informations du système d'exploitation local au serveur ; et
la réception du progiciel d'installation envoyé par le serveur comprend :
lorsque le serveur détermine, en fonction des informations personnalisées de l'utilisateur et des informations du système d'exploitation local, que l'utilisateur choisit d'accepter le progiciel d'installation recommandé (203) lorsqu'il n'existe pas de progiciel d'installation correspondant au système d'exploitation, accepter un progiciel d'installation d'un autre logiciel envoyé par le serveur associé au logiciel et correspondant au système d'exploitation.

4. Procédé selon la revendication 3, dans lequel la réception du progiciel d'installation envoyé par le serveur comprend en outre : recevoir un fichier de configuration du logiciel correspondant aux informations de l'utilisateur envoyées par l'utilisateur, le fichier de configuration étant sauvegardé par l'utilisateur et enregistré dans les relations de correspondance par le serveur ; et
l'installation du logiciel selon le progiciel d'installation reçu comprend en outre : remplacer un fichier de configuration généré pendant l'installation par le fichier de configuration reçu.

5. Serveur, comprenant :
un second module de réception, (605) configuré pour recevoir des informations d'un utilisateur et des informations d'identification d'un logiciel envoyées par un premier terminal mobile lorsque l'utilisateur demande de sauvegarder le logiciel au niveau du serveur ;
un module d'établissement, (606) configuré pour établir une relation de correspondance entre les informations de l'utilisateur et les informations d'identification du logiciel au niveau du serveur ;
un premier module de réception, (601) configuré pour recevoir les informations de l'utilisateur et les informations d'identification du logiciel envoyées par un second terminal mobile lorsque l'utilisateur demande d'installer le logiciel sur le second terminal mobile ;
un module de détermination, (602) configuré pour rechercher des relations de correspondance entre des informations d'utilisateur et les informations de logiciel établies à l'avance, et déterminer si les relations de correspondance comprennent ou non les informations de l'utilisateur et les informations d'identification du logiciel correspondant ;
un module de recherche, (603) configuré pour déterminer si l'utilisateur a ou non sauvegardé les informations de logiciel lorsque le module de détermination détermine que les relations de correspondance comprennent les informations de l'utilisateur et les informations d'identification du logiciel correspondant, et rechercher un progiciel d'installation correspondant au logiciel ; et
un module d'envoi, (604) configuré pour envoyer le progiciel d'installation trouvé par le module de recherche au second terminal mobile, le progiciel d'installation étant configuré pour installer le logiciel sur le second terminal mobile ;
dans lequel le premier module de réception est configuré en outre pour recevoir les informations personnalisées de l'utilisateur envoyées par le second terminal mobile et des informations du système d'exploitation du second terminal mobile, les informations personnalisées de l'utilisateur étant réglées par l'utilisateur quant au point de savoir d'accepter ou non un progiciel d'installation recommandé par le serveur lorsqu'il n'existe pas de progiciel d'installation correspondant au système d'exploitation du second terminal mobile ; et
le module de recherche comprend :
une seconde unité de détermination, configurée pour déterminer si l'utilisateur choisit ou non d'accepter le progiciel d'installation recommandé lorsqu'il n'existe pas de progiciel d'installation correspondant au système d'exploitation du second terminal mobile en fonction des informations personnalisées de l'utilisateur et des informations du système d'exploitation du second terminal mobile ;
une troisième unité de recherche, configurée pour rechercher un progiciel d'installation d'un autre logiciel correspondant au système d'exploitation du second terminal mobile et concernant le logiciel selon les informations d'identification du logiciel et les informations du système d'exploitation du second terminal mobile lorsque la seconde unité de détermination détermine que l'utilisateur choisit d'accepter le progiciel d'installation recommandé lorsqu'il n'existe pas de progiciel d'installation correspondant au système d'exploitation du second terminal mobile ; et
une unité d'invite, configurée pour suggérer qu'il n'existe pas de progiciel d'installation du logiciel correspondant au système d'exploitation du second terminal mobile lorsque la seconde unité de détermination détermine que l'utilisateur choisit de ne pas accepter le progiciel d'installation recommandé lorsqu'il n'existe pas de progiciel d'installation correspondant au système d'exploitation du second terminal mobile.

6. Serveur selon la revendication 5, dans lequel le module de détermination est en outre configuré pour déterminer si les relations de correspondance comprennent ou non un fichier de configuration du logiciel correspondant aux informations de l'utilisateur ; et
le module d'envoi est en outre configuré pour envoyer le fichier de configuration au second terminal mobile lorsque le module de détermination détermine que les relations de correspondance comprennent le fichier de configuration du logiciel correspondant aux informations de l'utilisateur, le fichier de configuration étant utilisé pour remplacer un fichier de configuration généré pendant l'installation après que le logiciel est installé sur le second terminal mobile.

7. Terminal mobile, comprenant :
un module d'envoi, (801) configuré pour envoyer des informations d'un utilisateur et des informations d'identification d'un logiciel à un serveur lorsque l'utilisateur demande d'installer le logiciel qui a été sauvegardé au niveau du serveur par l'intermédiaire d'un autre terminal mobile, dans lequel le serveur détermine si les relations de correspondance établies entre des informations d'utilisateur et des informations de logiciel comprennent ou non les informations de l'utilisateur et les informations d'identification du logiciel ;
un module de réception, (802) configuré pour recevoir un progiciel d'installation envoyé par le serveur lorsque le serveur détermine que l'utilisateur a sauvegardé les informations du logiciel et un progiciel d'installation correspondant trouvé en fonction des informations d'identification du logiciel ; et
un module d'installation, (803) configuré pour installer le logiciel selon le progiciel d'installation reçu par le module de réception ;
dans lequel le module d'envoi est en outre configuré pour envoyer les informations personnalisées et des informations du système d'exploitation local au serveur si l'utilisateur a réglé les informations personnalisées quant au point de savoir d'accepter ou non le progiciel d'installation recommandé lorsqu'il n'existe pas de progiciel d'installation correspondant au système d'exploitation local ; et
le module de réception est configuré pour recevoir le progiciel d'installation d'un autre logiciel associé au logiciel qui est envoyé par le serveur et correspond au système d'exploitation lorsque le serveur détermine, en fonction des informations personnalisées de l'utilisateur et des informations du système d'exploitation, que l'utilisateur choisit d'accepter le progiciel d'installation recommandé lorsqu'il n'existe pas de progiciel d'installation correspondant au système d'exploitation.

8. Terminal mobile selon la revendication 7, dans lequel le module de réception est en outre configuré pour recevoir un fichier de configuration du logiciel correspondant aux informations de l'utilisateur envoyées par le serveur, le fichier de configuration étant sauvegardé par l'utilisateur et enregistré dans les relations de correspondance par le serveur ;
le terminal mobile comprend en outre : un module de remplacement, (804) configuré pour remplacer un fichier de configuration généré dans le processus d'installation par le fichier de configuration reçu par le module de réception ; et
le module d'envoi est en outre configuré pour envoyer des informations personnalisées de l'utilisateur au serveur si l'utilisateur a réglé les informations personnalisées concernant le point de savoir d'installer ou non la dernière version du logiciel.
